# EUROPÄISCHE PATENTSCHRIFT

(11) **EP 4 392 219 B1**
(45) Veröffentlichungstag und Bekanntmachung des Hinweises auf die Patenterteilung: **27.11.2024**
(21) Anmeldenummer: 22808664.1
(22) Anmeldetag: 19.10.2022
(51) Int. Cl.: B29C 45/04, B29C 45/06, B29C 45/16, B29C 45/80

(54) **VERFAHREN ZUM DREHEN EINES DREHBAREN TEILS**
METHOD FOR ROTATING A ROTATABLE PART
MÉTHODE DE ROTATION D'UNE PARTIE ROTATIVE

(30) Priorität: 20.10.2021 DE 102021127214
(43) Veröffentlichungstag der Anmeldung: 03.07.2024
(73) Patentinhaber: Arburg GmbH + Co KG, 72290 Loßburg (DE)
(72) Erfinder: FAULHABER, Werner, 72290 Loßburg Wittendorf (DE)
(74) Vertreter: RPK Patenanwälte Reinhardt und Kaufmann Partnerschaft mbB (Pforzheim)
(86) Internationale Anmeldenummer: PCT/EP2022/079052
(87) Internationale Veröffentlichungsnummer: WO 2023/066969

(56) Entgegenhaltungen:
- EP-A1- 0 895 848
- EP-A2- 2 266 773
- US-A1- 2005 142 244
- US-A1- 2012 087 999

## Beschreibung

Die vorliegende Erfindung liegt auf dem Gebiet der Werkzeuge und Maschinen zur Verarbeitung von Kunststoffen und anderer plastifizierbarer Massen, insbesondere auf dem Gebiet der Spritzgießmaschinen. Die Erfindung betrifft ein Verfahren zum Drehen wenigstens eines Teils um wenigstens eine Drehachse nach dem Oberbegriff des Anspruchs 1, eine Maschine nach dem Oberbegriff des Anspruchs 12 sowie ein Computerprogrammprodukt nach dem Oberbegriff des Anspruchs 13.

Wenn im Rahmen dieser Anmeldung von einem "Formteil" die Rede ist, so handelt es sich dabei um ein teilweise oder vollständig in einem Formnest oder einem Formhohlraum eines (Form-)Werkzeugs einer Maschine zur Verarbeitung von Kunststoffen und anderer plastifizierbarer Massen geformtes und dadurch hergestelltes Spritzteil oder einen so geformten oder hergestellten Spritzling. Diese Begriffe können synonym verwendet werden.

Aus dem Stand der Technik sind Maschinen zur Verarbeitung von Kunststoffen und anderer plastifizierbarer Massen bekannt, welche ein oder mehrere drehbare Teile, z.B. ein Mittelteil, einen Würfel, ein Werkzeug oder ein Würfelwerkzeug aufweisen, welche zur Herstellung von Formteilen verwendet werden. Bekannt sind z.B. Systeme zum optimierten Betrieb eines Würfelwerkzeuges an Spritzgießmaschinen. Würfelwerkzeuge bestehen in der Regel aus drei Werkzeugsegmenten, einem ersten Segment, das z.B. eine an einer beweglichen Werkzeugplatte befestigte Werkzeugform aufweist, einem zweiten Segment, das eine an einer festen Werkzeugplatte befestigte Werkzeugform aufweist, und einem dritten Segment bzw. dem drehbaren Teil, z.B. einem Würfel, der in der Draufsicht ein Quadrat (daher der Name Würfelwerkzeug) und im Schnittpunkt der Diagonalen der Draufsicht eine vertikale Drehachse aufweist. Das erste Segment kann z.B. mit der beweglichen Werkzeugplatte entlang einer Linearachse bewegt werden. Das dritte Segment bzw. der Würfel ist drehbar gelagert und kann auf einem Verschiebetisch befestigt sein. Der Verschiebetisch kann linear entlang einer Achse bewegt werden. Die beiden Linearbewegungen der beweglichen Werkzeugplatte und des Verschiebetischs sind in der Regel parallel zueinander. Der Würfel kann z.B. in vier Schritten zu je 90° gedreht werden in die Positionen A, B, C und D. So zeigt zum Beispiel die Würfelfläche A in Richtung des zweiten Segments. Nach zweimaligem Drehen (insgesamt 180°) zeigt diese Würfelfläche A dann in Richtung des ersten Segments. Alternativ kann der Würfel auch um 180° gedreht werden, in diesem Fall ist der Würfel an nur zwei Seiten mit Kavitäten bestückt. In Sonderfällen kann der Würfel nochmals in der horizontalen Ebene, in eine obere und eine untere Würfelhälfte geschnitten sein, welche getrennt voneinander mit zwei Antrieben gedreht werden können. Somit können die obere und untere Würfelhälfte auch in unterschiedliche Drehrichtungen drehen.

Die Funktion der Werkzeugfahrbewegungen wird im Folgenden anhand eines laufenden Prozesses beschrieben. Das Werkzeug steht in der Position geschlossen, d.h. der Würfel bildet z.B. mit der Würfelfläche A und dem zweiten Segment (feste Werkzeugplatte) ein Formnest 2A. Auf der gegenüberliegenden Seite bildet die Würfelfläche C mit dem ersten Segment (bewegliche Werkzeugplatte) ein Formnest 1C. In der Regel wird gleichzeitig über zwei Einspritzeinheiten jeweils eine plastifizierbare Schmelze in die beiden Formnester 2A und 1C eingespritzt. Die über die bewegliche Platte eingebrachte Kraft bildet dabei die Schließkraft auf das Werkzeug. Ist die Entformbarkeit der Formteile erreicht, öffnet das erste Segment mit der beweglichen Werkzeugplatte. Nach einer vorher eingestellten Verzögerungszeit verschiebt sich der Schiebetisch mit der Drehachse des Würfelsegments in eine Position, an der der Würfel kollisionsfrei gedreht werden kann. Nun kann der Würfel um mindestens 90° drehen. Gedreht wird in der Regel entweder in eine Richtung oder alternierend.

Die US 2005/0142244 A1 offenbart eine Spritzgießmaschine mit einer als rotierbarer Kühlturm ausgebildeten Kühlungsvorrichtung sowie einem rotierbaren Werkzeug. Material wird in das Werkzeug eingespritzt, welches sich anschließend in eine Position dreht, in der Kühlrohre der Kühlungsvorrichtung in die Vorformen einfahren können. Die Vorformen werden gekühlt und mit Druck beaufschlagt. Daraufhin dreht sich das Werkzeug wieder und die behandelten Vorformen werden ausgeworfen. Die Kühlvorrichtung ist auf Linearführungen angeordnet, was eine Bewegung parallel zu den Linearführungen erlaubt. Nach dem Einspritzen wird das Werkzeug so weit geöffnet, dass der Rotationsbogen der Kerne des Werkzeugs frei ist. Die Spritzlinge werden mittels eines Gebläses der Kühlvorrichtung gekühlt, wobei danach die Kühlvorrichtung ebenfalls so weit geöffnet wird, dass ein ausreichender Abstand für die Rotation der Kühlrohre vorhanden ist. Insgesamt wird damit das Werkzeug so weit geöffnet, dass eine Rotation des Werkzeugs oder der Kühlvorrichtung möglich ist, ohne dass es zu einer Kollision kommt.

In der CH 707 711 A2 ist eine Haltevorrichtung für ein drehbares Formmittelteil in einer Spritzgießmaschine offenbart. Ein um eine Drehachse drehbarer und über einen Motor angetriebener Teller dient zur Halterung des drehbaren Formmittelteils. Die Haltevorrichtung umfasst eine untere Traverse, welche über erste Lagerblöcke auf einem Maschinenbett der Spritzgießmaschine abgestützt auf Führungsschienen in Längsrichtung verschiebbar gelagert ist. Weiter umfasst die Haltevorrichtung zweite Lagerblöcke, mittels denen die untere Traverse in Umfangsrichtung gegenüber von unteren Holmen der Spritzgießmaschine abgestützt ist.

Die WO 2019/029984 A1 offenbart eine Montagevorrichtung für Formwerkzeugteile eines Spritzgießwerkzeuges, wobei das Werkzeug auf einer Montageplatte angebracht ist, welche in die Spritzgießmaschine eingesetzt und bei Bedarf auch wieder von dieser entfernt werden, wobei über ein Führungssystem eine translatorische Verlagerung der Montageplatte erfolgen kann.

Aus EP 2 266 773 A2, EP 0 895 848 A1 und US 2012/087999 A1 ist es bekannt, Kollisionen der Formaufspannplatten mit drehbaren Teilen zu verhindern. Eine Drehung erfolgt bei ausreichendem Abstand zwischen Formaufspannplatte und drehbarem Teil. Die Formteilhöhe wird dabei nicht erwähnt und nicht berücksichtigt.

Ausgehend von diesem Stand der Technik liegt der vorliegenden Erfindung die Aufgabe zugrunde, ein Verfahren zum Drehen eines drehbaren Teils um wenigstens eine Drehachse einer Maschine zur Verarbeitung von Kunststoffen und anderer plastifizierbarer Massen, insbesondere einer Spritzgießmaschine bereitzustellen, das die Bewegungen der Maschine, insbesondere die Werkzeugbewegungen, optimiert und Zykluszeit einspart sowie trotzdem sicher, schonend und verschleißarm arbeitet.

Diese Aufgabe wird durch ein Verfahren zum Drehen eines drehbaren Teils einer Maschine zur Verarbeitung von Kunststoffen und anderer plastifizierbarer Massen, insbesondere einer Spritzgießmaschine mit den Merkmalen des Anspruchs 1, eine Maschine mit den Merkmalen des Anspruchs 12 sowie durch ein Computerprogrammprodukt mit den Merkmalen des Anspruchs 13 gelöst.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Bei einem Verfahren zum Drehen eines drehbaren Teils, wie z.B. eines Mittelteils, eines Würfels, eines Werkzeugs oder eines Würfelwerkzeugs um wenigstens eine Drehachse einer Maschine zur Verarbeitung von Kunststoffen und anderer plastifizierbarer Massen, insbesondere einer Spritzgießmaschine mit wenigstens einem bewegbaren Segment, z.B. eine bewegliche Formaufspannplatte, eine bewegliche Werkzeugplatte, ein bewegliches Formsegment oder ein bewegliches Werkzeugsegment für die Herstellung wenigstens eines Formteils, wird die Bewegung des wenigstens einen Segments mit der Bewegung des drehbaren Teils wenigstens teilweise überlagert, wobei die Bewegung des drehbaren Teils dann gestartet wird, wenn der Abstand zwischen dem wenigstens einen Segment und dem drehbaren Teil größer ist als eine Formteilhöhe eines auf der Maschine herzustellenden Formteils. Die Formteilhöhe entspricht der Abmessung, die das bevorzugt komplett entformte Formteil aus dem drehbaren Teil herausragt. Vorteilhaft erfolgt so eine Zeitersparnis bzgl. der Zykluszeit, wobei dennoch eine Sicherheit hinsichtlich einer Kollision des Teils gewährleistet ist.

Das drehbare Teil, z.B. ein Mittelteil, ein Würfel, ein Werkzeug oder ein Würfelwerkzeug ist dafür vorgesehen, konstruiert und eingerichtet sich zu drehen und/oder zu rotieren. Weiter kann das drehbare Teil aber auch eine beliebige Kombination aus einer Drehbewegung, einer Rotationsbewegung, einer Linearbewegung und/oder einer translatorischen Bewegung ausführen. Beispielsweise kann die Drehbewegung oder die Rotationsbewegung des drehbaren Teils gegen den und/oder im Uhrzeigersinn und die Linearbewegung und/oder die translatorische Bewegung des drehbaren Teils horizontal und/oder vertikal erfolgen.

Bevorzugt ist die Bewegung des drehbaren Teils eine Drehbewegung und/oder eine Rotationsbewegung. Weiter bevorzugt kann die Bewegung des drehbaren Teils auch eine beliebige Kombination aus einer Drehbewegung, einer Rotationsbewegung, einer Linearbewegung und/oder einer translatorischen Bewegung sein.

Um vorteilhaft die Zykluszeit weiter zu optimieren, ist das drehbare Teil an und/oder auf einem bewegbaren Tisch, z.B. einem Verschiebetisch angebracht und die Bewegung des Tisches wird wenigstens teilweise mit der Bewegung des wenigstens einen Segments und/oder der Bewegung des drehbaren Teils überlagert. Die Bewegungen des Tischs, des Segments und/oder des Teils werden somit wenigstens teilweise gleichzeitig ausgeführt. Es wird nicht erst abgewartet, bis das Segment z.B. seine Zielposition erreicht hat, bevor das drehbare Teil bewegt wird, sondern das drehbare Teil beginnt seine Bewegung bereits während wenigstens teilweise die Bewegung des wenigstens einen Segments noch im Gange ist. Beispielsweise führt das Teil seine Bewegung aus und/oder beginnt seine Bewegung bei gleichzeitiger Bewegung des Tisches und/oder des Segments. Bevorzugt erfolgt die Bewegung des Tisches linear entlang einer Achse. Beispielsweise kann die Bewegung des Tisches über ein Kolbensystem servohydraulisch und/oder servoelektrisch über Zahnstangen und Spindeln oder einen Direktantrieb realisiert werden. Weiter bevorzugt können die Bewegungen des Tisches und des Segments im Wesentlichen parallel zueinander sein. Die Bewegung des wenigstens einen Segments verläuft z.B. in die gleiche Richtung wie die Bewegung des Tisches. Denkbar ist auch, dass bei beispielsweise zwei bewegbaren Segmenten, welche z.B. als bewegliche Platten ausgeführt sind, der Tisch stehen bleibt.

Zudem werden die Bewegungen des wenigstens einen Segments, des Tisches und/oder des drehbaren Teils wenigstens teilweise miteinander gekoppelt. Beispielsweise kann die Bewegung des wenigstens einen Segments mit dem drehbaren Teil, die Bewegung des wenigstens einen Segments mit dem Tisch, die Bewegung des Tisches mit dem drehbaren Teil oder die Bewegung des wenigstens einen Segments mit dem Tisch und dem drehbaren Teil gekoppelt sein. Die Bewegungen des Segments, des Tisches und/oder des Teils sind somit abhängig voneinander. Vorteilhaft entstehen somit keinerlei Verzögerungszeiten und die Zykluszeit ist entsprechend der programmierten Geschwindigkeit verkürzt. Weiter vorteilhaft kann somit das Werkzeug gefahrlos betrieben werden. Wird beispielsweise die Geschwindigkeit der Linearbewegung im Ablauf verändert, werden die restliche Achsbewegungen automatisch dieser Veränderung angepasst. Auch ein langsames Anfahren des Werkzeugs zur Überprüfung der Abläufe ist vorteilhaft problemlos möglich. Bevorzugt ist z.B. die Bewegung des Tischs so lange an die Bewegung des Segments gekoppelt, bis eine überlagerte Bremsfunktion eingreift und den Tisch auf seine finale Position für den entsprechenden Arbeitsschritt abbremst. Weiter bevorzugt entfernt sich durch die gekoppelte Bewegung der Tisch und/oder das drehbare Teil von dem Segment und gegebenenfalls auch von einem weiteren Segment, z.B. einer festen oder weiteren beweglichen Werkzeugplatte. Der sich vergrößernde Abstand ist vorzugsweise dann auf beiden Seiten identisch.

Bevorzugt erfolgt die Bewegung des wenigstens einen Segments entlang einer Linearachse. Beispielsweise kann die bewegliche Werkzeugplatte über ein Kniehebel-Antriebssystem, z.B. eine Antriebsspindel mit einem servoelektrischen Antrieb, oder einen Kolben mit einem Antrieb, z.B. einem servohydraulischen Antrieb verbunden sein.

Prinzipiell denkbar ist auch, dass weitere Segmente, z.B. zwei Segmente vorgesehen sind, von denen wenigstens ein Segment beweglich ist, wie z.B. eine bewegliche Werkzeugplatte. Beispielsweise kann im Fall von zwei Segmenten ein Segment als eine bewegliche und ein Segment als eine stationäre Werkzeugplatte ausgeführt sein. Ebenfalls möglich ist auch, dass zwei Segmente bewegbar sind, wobei beide Segmente beispielsweise als bewegliche Platten ausgeführt sein können.

Um vorteilhaft eine Kollision des Tisches mit dem wenigstens einen Segment zu vermeiden, wird bevorzugt die Bewegung des Tisches gegenüber der Bewegung des wenigstens einen Segments mit einem Faktor kleiner oder gleich eins, vorzugsweise einem Faktor von 0,1, 0,2, 0,3, 0,4, 0,5, 0,6, 0,7, 0,8, 0,9 oder 1,0 multipliziert. Bevorzugt erfährt der Tisch durch seine Bewegung eine Positionsänderung, welche mit einem Faktor kleiner oder gleich eins, vorzugsweise einem Faktor von 0,5 multipliziert wird. Der Tisch bewegt sich bevorzugt langsamer als das Segment, sodass das an dem Tisch angebrachte Teil sich effektiv von dem Segment, z.B. einer beweglichen Werkzeugplatte und gegebenenfalls von einem weiteren Segment, z.B. von einer weiteren beweglichen oder einer stationären Werkzeugplatte entfernt.

Die Kopplung der Bewegung des wenigstens einen Segments, des bewegbaren Tisches und/oder des drehbaren Teils wird bevorzugt elektrisch und/oder mechanisch durchgeführt. Beispielsweise könnte über eine mechanische Welle die Bewegung des wenigstens einen Segments mit der Bewegung des Tisches und des drehbaren Teils gekoppelt werden. Denkbar ist auch eine elektrische Kopplung z.B. über eine Steuerung, welche die jeweiligen Positionen des wenigstens einen Segments, des Tischs und/oder des drehbaren Teils (er-)kennt und entsprechend koordiniert und/oder steuert. Auch möglich ist eine gemischte Kopplung, bei der beispielsweise die Kopplung zwischen dem wenigstens einen Segment und dem Tisch mechanisch mittels z.B. einer Zahnstange ausgeführt ist und die weitere Kopplung bzgl. des drehbaren Teils elektronisch erfolgt.

Um vorteilhaft eine genaue und sichere Bewegung zu erhalten, wird bevorzugt die Bewegung des wenigstens einen Segments, des drehbaren Teils und/oder des Tischs positionsgeregelt. Beispielsweise kann die Positionsregelung mit einem servoelektrischen und/oder servohydraulischen Antrieb, z.B. ein Direktantrieb oder ein Kolbensystem, durchgeführt werden. Beispielsweise wird zum vorteilhaften Öffnen und Drehen des Würfelwerkzeugs beim Öffnen zuerst die bewegliche Werkzeugplatte bewegt. Hierbei wird über die Positionsregelung zyklisch die nächste, anzufahrende Position als ein Sollwert vorgegeben. Dieser Sollwert ist z.B. der der linearen Werkzeugposition.

Im Allgemeinen besteht zwischen einem Antrieb, z.B. einem Motordrehwinkel und einer entsprechenden Bewegung des wenigstens einen Segments, des Teils und/oder des Tischs kein linearer Zusammenhang. Um vorteilhaft eine möglichst effiziente und schnelle Werkzeugbewegung zu realisieren, wird bevorzugt für die Positionsregelung die Bewegung des wenigstens einen Segments, des drehbaren Teils und/oder des Tischs mit einer mathematischen Funktion verknüpft. Bevorzugt berücksichtigt die mathematische Funktion die Kinematik des entsprechenden Antriebs und/oder der entsprechenden Antriebe. Beispielsweise stehen bei einem servoelektrischen Antrieb der Motordrehwinkel und die Linearbewegung der beweglichen Werkzeugplatte nicht in einem linearen Zusammenhang. Um vorteilhaft eine möglichst effiziente Bewegung zu realisieren, wird die gewünschte Bewegungsform bevorzugt mittels einer mathematischen Funktion mit der Kinematik des Antriebs verknüpft.

Bevorzugt wird die Bewegung des drehbaren Teils in wenigstens einer Winkelposition um die Drehachse entlang einer Drehkollisionskurve positionsgeregelt, wodurch vorteilhaft die Bewegung möglichst ruckfrei, aber dennoch mit maximaler Beschleunigung und später Verzögerung, entsprechend der programmierten Geschwindigkeit erfolgt. Weiter bevorzugt ist die Bewegung des drehbaren Teils über die Drehkollisionskurve hart mit der Positionsregelung des Tischs und damit in zweiter Ebene mit der Positionsregelung des Segments, z.B. mit der beweglichen Werkzeugplatte gekoppelt. Beispielsweise kann mit der Drehkollisionskurve überprüft werden, ob eine Drehung des drehbaren Teils möglich ist, wodurch vorteilhaft die Sicherheit erhöht wird.

Um vorteilhaft eine möglichst effiziente und schnelle Werkzeugbewegung zu realisieren, ist die Drehkollisionskurve bevorzugt von wenigstens einem Parameter des Teils, z.B. der Kantenlänge des drehbaren Teils und/oder der Formteilhöhe des Formteils abhängig. Bevorzugt wird die Drehkollisionskurve eines Würfelwerkzeugs durch eine mathematische Funktion beschrieben, die beispielsweise abhängig von der Kantenlänge des Würfelwerkzeugs und/oder der Formteilhöhe ist.

Vorzugsweise kann der wenigstens eine Parameter des drehbaren Teils, z.B. die Kantenlänge des drehbaren Teils und/oder die Formteilhöhe, eingegeben und/oder geteacht werden. Beispielsweise können die Parameter in die Steuerung eingegeben und/oder an der Maschine abgegriffen werden. Es ist jedoch auch möglich, dass der Steuerung anhand des verwendeten drehbaren Teils die Parameter automatisch mitgegeben werden. Möglich ist auch, dass das drehbare Teil die Parameter aufweist und bei Installation des drehbaren Teils in die Maschine die Parameter an die Maschine und/oder Steuerung übertragen werden. Sind in diesem Beispiel die Parameter Kantenlänge des Würfelwerkzeugs und die Formteilhöhe richtig parametriert und wurde das Werkzeug mit seinen Segmenten und dem drehbaren Teil in der geschlossenen Form "abgenullt", kann es vorteilhaft zu keiner Kollision kommen. Diese Sicherheit ist vorteilhaft sowohl im Automatik- als auch im Handbetrieb gegeben.

Bevorzugt wird die Bewegung von wenigstens einem Peripheriesystem, z.B. einem Robot System und/oder einem Greifer, mit den Bewegungen des wenigstens einen Segments, des Tisches und/oder des drehbaren Teils wenigstens teilweise miteinander gekoppelt. Vorteilhaft werden so Verzögerungszeiten vermieden und die Zykluszeit wird verkürzt. Beispielsweise können durch eine Steuerungsintegration eines Robot Systems die Bewegungsabläufe des Robot Systems ebenfalls mit den Bewegungen des Tischs und der Bewegung des drehbaren Teils gekoppelt werden.

Auch wird die Aufgabe durch eine Maschine zur Verarbeitung von Kunststoffen und anderer plastifizierbarer Massen, insbesondere eine Spritzgießmaschine gelöst. Für eine vorteilhafte Optimierung in Hinsicht auf die Bewegungen der Maschine, insbesondere die Werkzeugbewegungen und einer Einsparung von Zykluszeit sowie einer trotzdem sicheren, schonenden und verschleißarmen Arbeitsweise ist die Maschine eingerichtet, ausgeführt und/oder konstruiert, um das oben beschriebene Verfahren auszuführen.

Ebenfalls wird die Aufgabe durch ein Computerprogrammprodukt gelöst. Für eine vorteilhafte Optimierung in Hinsicht auf die Bewegungen der Maschine, insbesondere die Werkzeugbewegungen und einer Einsparung von Zykluszeit sowie einer trotzdem sicheren, schonenden und verschleißarmen Arbeitsweise ist das Computerprogrammprodukt mit einem Programmcode auf einem Computer lesbaren Medium gespeichert zur Durchführung des oben beschriebenen Verfahrens.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Im Folgenden wird die Erfindung anhand eines in den beigefügten Figuren dargestellten Ausführungsbeispiels näher erläutert. Es zeigen:
- Fig. 1 - 5: schematische Darstellungen von verschiedenen Bewegungen und Stellungen des drehbaren Teils bei einer Drehung von 90°,
- Fig. 6 - 10: schematische Darstellungen von verschiedenen Bewegungen und Stellungen des drehbaren Teils bei einer Drehung von 90°,
- Fig. 11, 12: Diagramme.

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

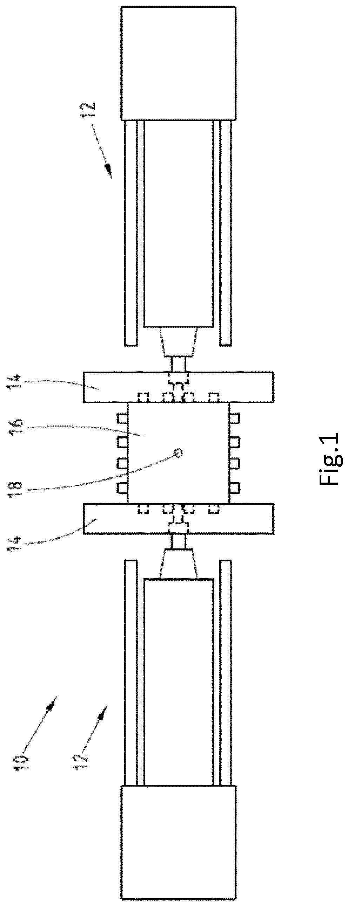

In einem ersten Ausführungsbeispiel gemäß den Fig. 1 - 5 ist jeweils eine Maschine 10 zur Verarbeitung von Kunststoffen und anderer plastifizierbarer Massen, z.B. eine Spritzgießmaschine mit zwei Einspritzeinheiten 12 und zwei Segmenten 14, vorzugsweise bewegbare Segmente 14, welche z.B. jeweils eine bewegliche Werkzeugplatte darstellen, für die Herstellung wenigstens eines Formteils gezeigt. Prinzipiell ist es in einem weiteren Ausführungsbeispiel auch denkbar, dass lediglich ein bewegbares Segment 14 und/oder lediglich eine Einspritzeinheit 12 vorgesehen ist. Auch ist es in einem weiteren Ausführungsbeispiel möglich, dass zwei Segmente 14 vorgesehen sind, wobei z.B. ein Segment 14 als eine bewegliche und ein Segment 14 als eine stationäre Werkzeugplatte ausgeführt sind. Ein um wenigstens eine Drehachse 18 drehbares Teil 16, z.B. ein Würfelwerkzeug, ist zwischen den Segmenten 14 angeordnet. Im Ausführungsbeispiel ist das drehbare Teil 16 an und/oder auf einem Tisch 30 angebracht.

In Fig. 1 befindet sich das drehbare Teil 16, z.B. das Würfelwerkzeug in einem geschlossenen Zustand. Beispielsweise kann in diesem Zustand Schmelze in das Werkzeug durch die Einspritzeinheiten 12 eingespritzt werden. Ist der Einspritzvorgang abgeschlossen und/oder die Entformbarkeit der Formteile erreicht, kann das Würfelwerkzeug um einen Winkel gedreht werden, z.B. um 90°, 180°, 270° oder 360°. Prinzipiell kann das drehbare Teil 16 um einen beliebigen Winkel gedreht werden.

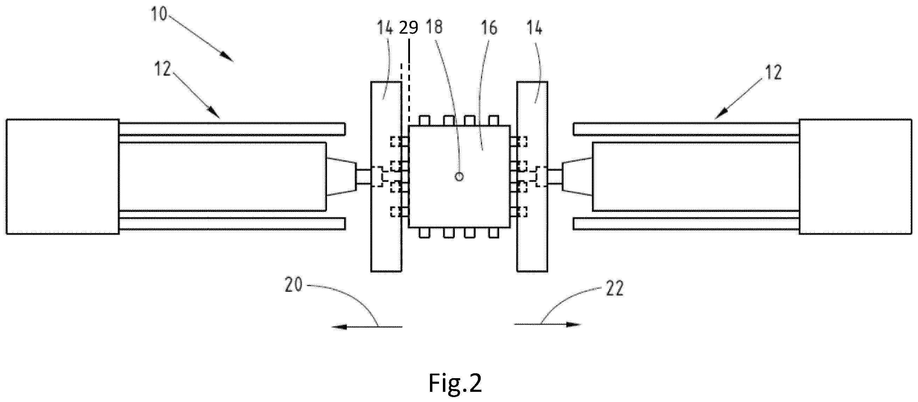

In Fig. 2 werden die Segmente 14 jeweils in eine Richtung 20, 22 bewegt. Vorzugsweise erfolgen die Bewegungen in entgegengesetzte Richtungen 20, 22, z.B. nach links und rechts. Gibt es in einem weiteren Ausführungsbeispiel lediglich ein bewegbares Segment 14, so kann die Bewegung prinzipiell in eine beliebige Richtung 20, 22 erfolgen, z.B. nach links oder rechts. Bevorzugt erfolgen die Bewegungen so, dass das drehbare Teil 16 in einen geöffneten Zustand überführt wird.

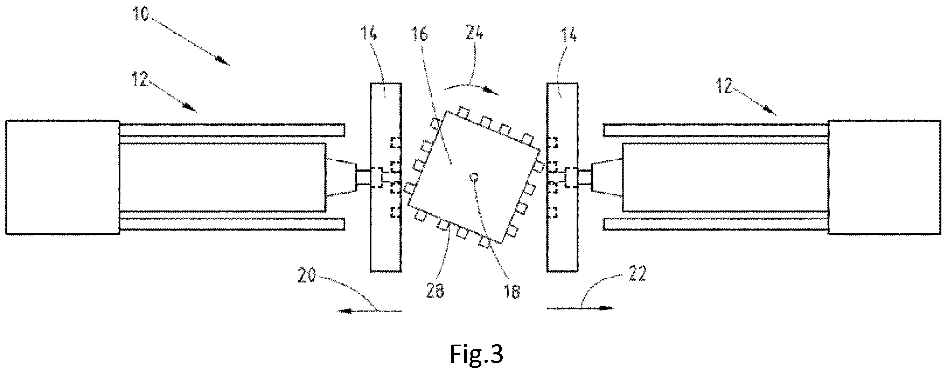

In Fig. 3 ist die Bewegung der Segmente 14 noch nicht abgeschlossen, wobei jedoch schon die Bewegung des drehbaren Teils 16 in eine Richtung 24, z.B. als eine Drehung im Uhrzeigersinn beginnt. Die Bewegung der Segmente 14 wird demnach mit der Bewegung des drehbaren Teils 16 wenigstens teilweise überlagert. Das drehbare Teil 16 führt bereits seine Bewegung schon aus, während die Bewegung des wenigstens einen Segments 14 noch andauert. Hierdurch ergibt sich vorteilhaft eine Optimierung in Hinsicht auf die Bewegungen der Maschine, insbesondere die Werkzeugbewegungen, und eine Einsparung von Zykluszeit sowie eine trotzdem sichere, schonende und verschleißarme Arbeitsweise.

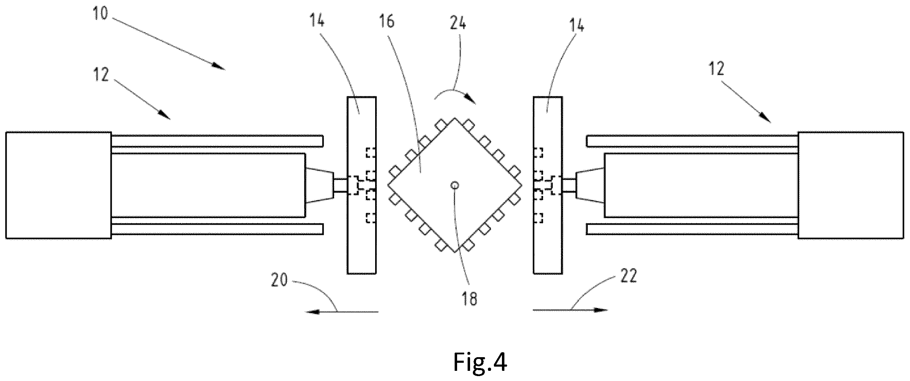

In Fig. 4 bewegen sich die Segmente 14 weiter in die Richtungen 20, 22 und das drehbare Teil 16 bewegt sich weiter in die Richtung 24 und dreht.

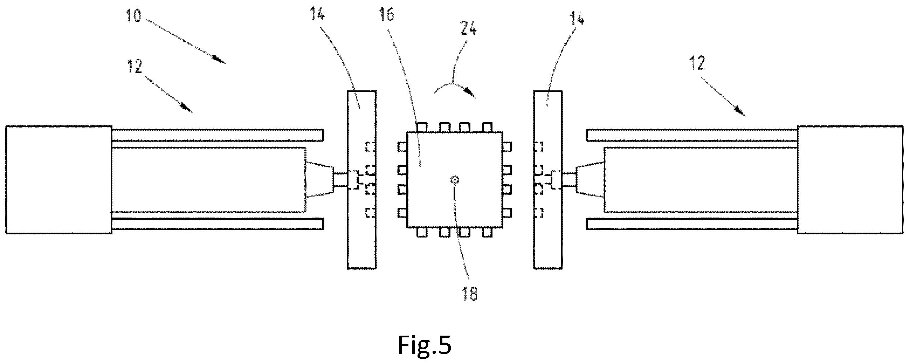

In Fig. 5 sind die Bewegungen der Segmente 14 und des drehbaren Teils 16 abgeschlossen. Das drehbare Teil 16 ist in Fig. 5 um 90° gegenüber der Stellung in Fig. 1 gedreht. Prinzipiell sind beliebige Drehungen um beliebige Drehachsen und/oder-winkel denkbar, z.B. um 90°, 180°, 270°, 360°, -90°, -180°, -270° oder -360°. Ebenfalls möglich ist auch ein alternierender Betrieb.

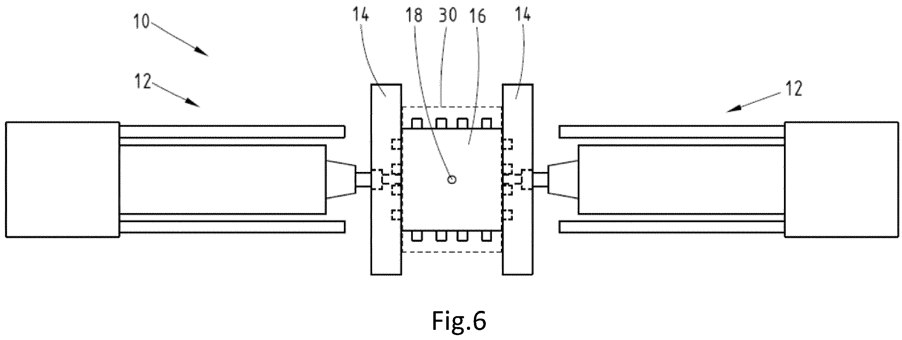

In einem weiteren Ausführungsbeispiel gemäß den Fig. 6 - 10 ist jeweils eine Maschine 10 zur Verarbeitung von Kunststoffen und anderer plastifizierbarer Massen, z.B. eine Spritzgießmaschine mit zwei Einspritzeinheiten 12 und zwei bewegbaren Segmenten 14, welche z.B. jeweils eine bewegliche Werkzeugplatte darstellen, für die Herstellung wenigstens eines Formteils gezeigt. Prinzipiell ist es in einem weiteren Ausführungsbeispiel auch denkbar, dass lediglich ein bewegbares Segment 14 und/oder lediglich eine Einspritzeinheit 12 vorgesehen ist. Auch ist es in einem weiteren Ausführungsbeispiel möglich, dass zwei Segmente 14 vorgesehen sind, wobei z.B. ein Segment 14 als eine bewegliche und ein Segment 14 als eine stationäre Werkzeugplatte ausgeführt sind. Ein um wenigstens eine Drehachse 18 drehbares Teil 16, z.B. ein Würfelwerkzeug, welches an und/oder auf einem Tisch 30, z.B. einem Verschiebetisch angebracht ist, ist zwischen den Segmenten 14 angeordnet.

In Fig. 6 befindet sich das drehbare Teil 16, z.B. ein Würfelwerkzeug, in einem geschlossenen Zustand. Beispielsweise kann in diesem Zustand Schmelze in das Werkzeug durch die Einspritzeinheiten 12 eingespritzt werden.

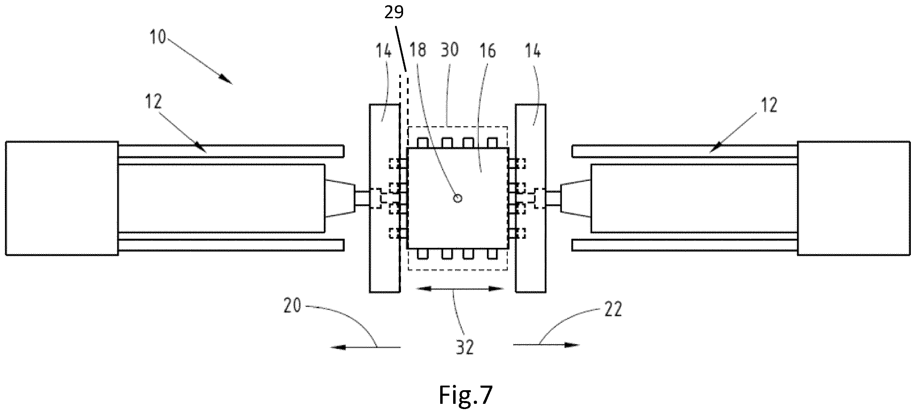

In Fig. 7 werden die Segmente 14 jeweils in eine Richtung 20, 22 bewegt. Vorzugsweise erfolgen die Bewegungen in entgegengesetzten Richtungen 20, 22, z.B. nach links und rechts. Gibt es in einem weiteren Ausführungsbeispiel lediglich ein bewegbares Segment 14, so kann die Bewegung prinzipiell in eine beliebige Richtung 20, 22 erfolgen, z.B. nach links oder rechts. Gegenüber Fig. 2 unterscheidet sich Fig. 7 dadurch, dass zusätzlich auch der Tisch 30 in eine Richtung 32, welche bevorzugt parallel zu wenigstens einer der Richtungen 20, 22 des Segments 14 ist, z.B. nach links oder rechts, bewegt wird. In Fig. 7 ist der Bewegung des Tischs 30 die Bewegung der Segmente 14 wenigstens teilweise überlagert. Prinzipiell ist es aber in einem anderen Ausführungsbeispiel auch denkbar, dass sich die Segmente 14 bewegen und der Tisch sich nicht bewegt bzw. stehen bleibt.

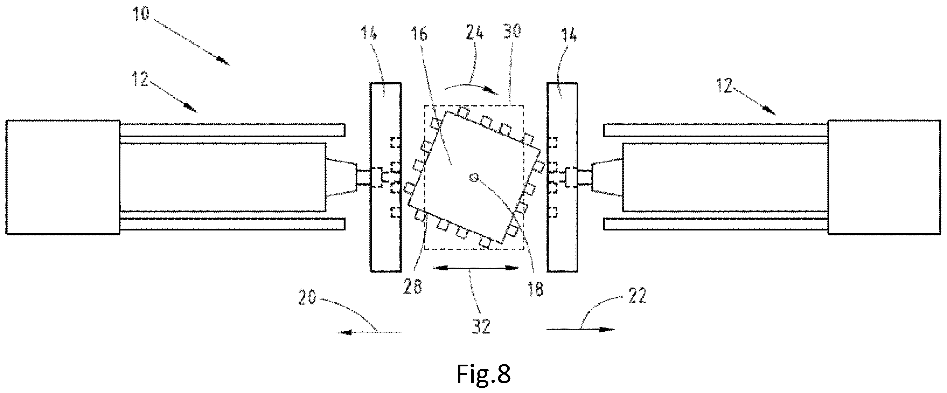

In Fig. 8 setzt zusätzlich zu der Bewegung der Segmente 14 und des Tisches 30 auch noch die Bewegung des drehbaren Teils 16 in eine Richtung 24, z.B. eine Drehung im Uhrzeigersinn ein. In Fig. 8 wird der Bewegung des Tischs 30 die Bewegung der Segmente 14 und/oder die Bewegung des drehbaren Teils 16 wenigstens teilweise überlagert.

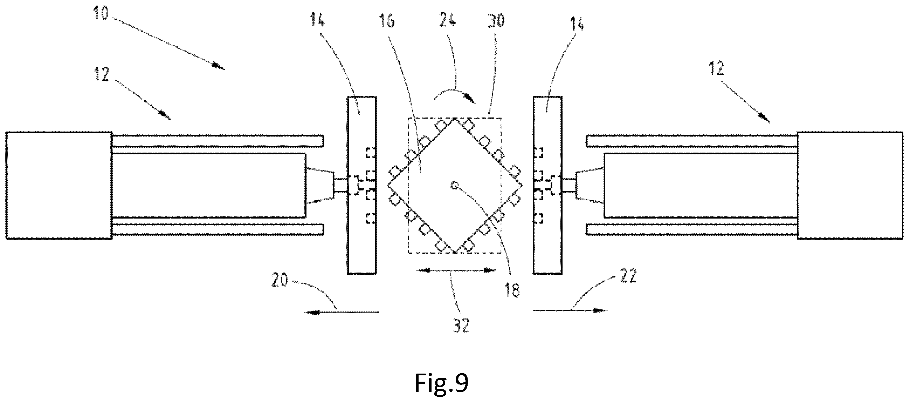

In Fig. 9 bewegen sich die Segmente 14 weiter in die Richtungen 20, 22, der Tisch in die Richtung 32, z.B. nach links oder rechts und das drehbare Teil 16 bewegt sich in die Richtung 24, z.B. im Uhrzeigersinn.

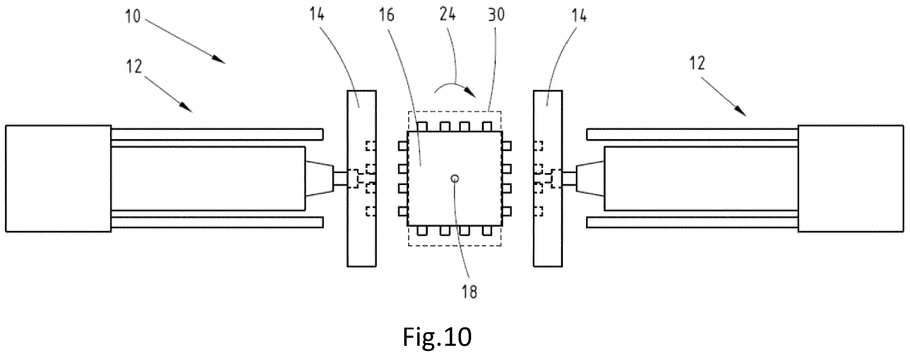

In Fig. 10 sind die Bewegungen der Segmente 14, des Tischs 30 und des drehbaren Teils 16 abgeschlossen. Das drehbare Teil 16 ist in Fig. 10 um 90° gegenüber der Stellung in Fig. 6 gedreht. Prinzipiell sind beliebige Drehungen um beliebige Drehachsen und/oder -winkel denkbar, z.B. um 90°, 180°, 270° oder 360°.

Im Ausführungsbeispiel werden die Bewegungen des wenigstens einen Segments 14, des Tisches 30 und/oder des drehbaren Teils 16 wenigstens teilweise miteinander gekoppelt. Die Bewegungen sind somit bevorzugt abhängig voneinander. Beispielsweise ist es denkbar, die Bewegung des Tischs 30 erst nach einer gewissen Bewegungszeit des Segments 14 zu starten und/oder sobald das Segment 14 eine bestimmte Position erreicht hat. Ebenfalls denkbar ist, dass die Bewegung des drehbaren Teils 16 erst dann gestartet wird, wenn der Tisch 30 und/oder das Segment 14 eine bestimmte Position erreicht haben und/oder sich eine bestimmte Zeit bewegt haben.

Auch kann in einem weiteren bevorzugten Ausführungsbeispiel die Kopplung gestaffelt ablaufen. Beispielsweise wird zunächst abgewartet, bis das Segment 14 eine bestimmte Position erreicht hat und/oder eine bestimmte Zeit bewegt wurde. Dann wird die Bewegung des Tischs 30 gestartet. Für den Start der Bewegung des drehbaren Teils 16 wird dann ebenfalls abgewartet, bis das Segment 14 und/oder der Tisch 30 eine bestimmte Position erreicht haben und/oder eine bestimmte Zeit bewegt wurden. In einem weiteren bevorzugten Ausführungsbeispiel wird die Bewegung des Tischs 30 so lange an die Bewegung des Segments 14 gekoppelt, bis eine überlagerte Bremsfunktion eingreift und den Tisch 30 auf seine finale Position für diesen Arbeitsschritt abbremst.

In einem weiteren bevorzugten Ausführungsbeispiel wird die Bewegung des Tisches 30 gegenüber der Bewegung des wenigstens einen Segments 14 mit einem Faktor kleiner oder gleich eins, vorzugsweise einem Faktor von 0,1, 0,2, 0,3, 0,4, 0,5, 0,6, 0,7, 0,8, 0,9 oder 1,0 multipliziert. Beispielsweise starten das Segment 14 und der Tisch 30 ihre Bewegung gleichzeitig, z.B. nach links in die Richtung 20. Die Bewegung des Tisches ist jedoch mit einem Faktor kleiner als oder gleich eins multipliziert, sodass die Positionsänderung des Tisches 30 geringer ist als die Positionsänderung des Segments 14. Vorteilhaft werden der Tisch 30 und damit das drehbare Teil 16 dem Segment 14 nachgeführt, ohne jedoch kollidieren zu können. Somit entfernt sich bei dieser Bewegung das drehbare Teil 16 von dem Segment 14. Sind in einem weiteren Ausführungsbeispiel z.B. zwei Segmente 14 vorgesehen, entfernt sich das drehbare Teil 16 von beiden Segmenten 14. Bevorzugt ist der sich vergrößernde Abstand auf beiden Seiten identisch.

In einem weiteren bevorzugten Ausführungsbeispiel wird die Kopplung elektrisch und/oder mechanisch durchgeführt. Beispielsweise ist es denkbar, mit einer mechanischen Welle das Segment 14, den Tisch 30 und/oder das drehbare Teil 16 zu koppeln, wodurch sich vorteilhaft eine erhöhte Sicherheit hinsichtlich der Bewegungsvorgänge ergibt. Bei einer elektrischen Kopplung können z.B. die Positionen des Segments 14, des Tischs 30 und des drehbaren Teils 16 erfasst werden. Bei einer entsprechend vorgegebenen Position erfolgen dann die jeweiligen Bewegungen, sodass vorteilhaft eine einfache und schnelle Kopplung, insbesondere bei einem Tausch des drehbaren Teils 16, vorgenommen werden kann. Auch denkbar ist eine gemischte Kopplung. Beispielsweise könnte mittels einer mechanischen Kopplung, z.B. einer Zahnstange das Segment 14 mit dem Tisch 30 gekoppelt werden und die Ankopplung an das drehbare Teil 16 elektrisch erfolgen.

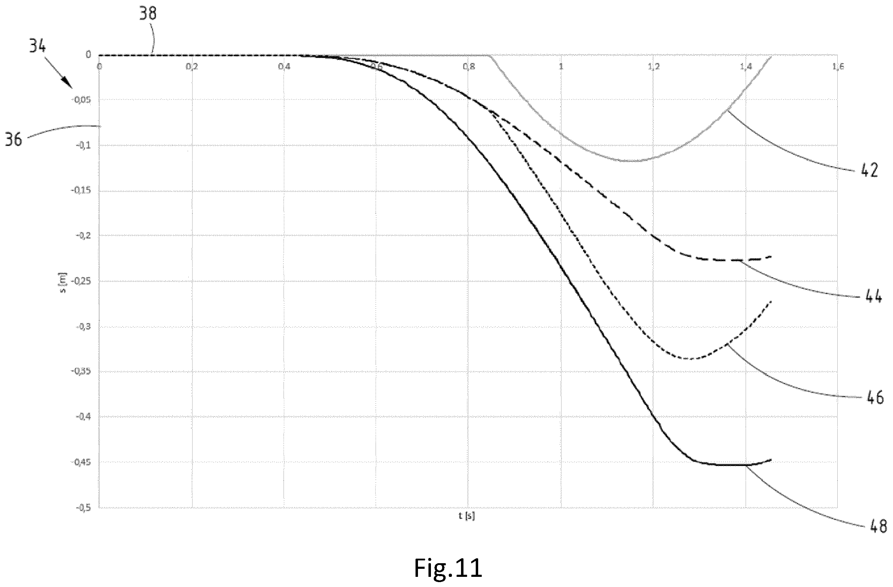

In Fig. 11 ist für ein weiteres Ausführungsbeispiel ein Diagramm 34 dargestellt, wobei eine Achse 36 z.B. der Weg in Metern über einer weiteren Achse 38 z.B. der Zeit in Sekunden aufgetragen ist. Eine Kurve 48 beschreibt die Position und/oder den zurückgelegten Weg des wenigstens einen Segments 14 zu einer bestimmten Zeit. Z.B. entspricht der Weg einem Wert von ungefähr -0,45 nach etwa 1,3 Sekunden. Die Werte der Achsen 36, 38 sind dabei lediglich beispielhaft zu verstehen. Eine Kurve 44 beschreibt die translatorische Bewegung des drehbaren Teils 16 aufgrund der Bewegung des bewegbaren Tisches 30. Man erkennt dort z.B. einen Faktor von etwa 0,5 zwischen der Bewegung des bewegbaren Tisches 30 bzw. der Kurve 44 und dem wenigstens einen Segment 14 bzw. der Kurve 48. Eine Kurve 42 beschreibt die Bewegung des drehbaren Teils 16 z.B. entlang der X-Koordinate. In einer Kurve 46 ist die überlagerte Bewegung des drehbaren Teils 16 mit dem bewegbaren Tisch 30 entlang z.B. der X-Koordinate dargestellt. Die Kurve 46 erhält man durch Summation der Kurven 44 und 42. Man erkennt, dass sich zunächst lediglich der bewegbare Tisch 30 bewegt, bis etwa bei einem Zeitpunkt von 0,85 Sekunden die Bewegung des drehbaren Teils 16 entlang der X-Koordinate beginnt. Das drehbare Teil 16 führt in Fig. 11 seine Bewegung erst dann aus, sobald die Lücke zwischen dem drehbaren Teil 16 und dem Segment 14 so groß ist, dass das drehbare Teil 16 auch im ungünstigsten Fall, z.B. bei einer Drehung um 45° in die Lücke passt und nicht kollidiert. Entsprechendes gilt z.B. auch für die Bewegung des drehbaren Teils entlang einer anderen Koordinate, z.B. der Y- oder Z-Koordinate.

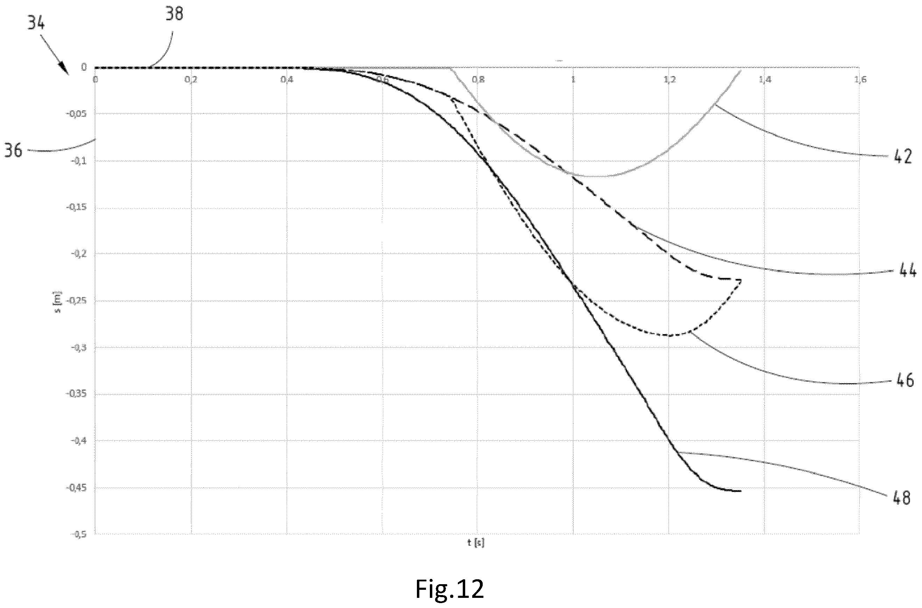

In einem weiteren Ausführungsbeispiel in Fig. 12 beginnt die Bewegung des drehbaren Teils 16 im Gegensatz zu Fig. 11 schon nach etwa 0,75 Sekunden, wodurch sich vorteilhaft eine kürzere Zykluszeit ergibt. Beispielsweise ist die Zeit gemäß Kurve 42 für die Bewegung des drehbaren Teils in Fig. 12 kleiner als 1,4 Sekunden, während die Zeit in Fig. 11 größer als 1,4 Sekunden ist. Da die restlichen Parameter in Fig. 12, z.B. Bewegungs- und/oder Drehgeschwindigkeiten, den Parametern in Fig. 11 entsprechen, erfolgt in Fig. 12 die Bewegung des drehbaren Teils 16 bereits zu einem Zeitpunkt, zu dem die Lücke zwischen dem drehbaren Teil 16 und dem Segment 14 noch nicht groß genug ist, im ungünstigsten Fall, z.B. bei einer Drehung von 45° eine Kollision zu verhindern. Die Kollision wird bevorzugt dadurch verhindert, dass während der Bewegung des drehbaren Teils 16 sich das Segment 14 weiterbewegt und sich somit die Lücke zwischen dem drehbaren Teil 16 und dem Segment 14 vergrößert, sodass bei Erreichen des ungünstigsten Falles die Lücke groß genug ist.

Im Ausführungsbeispiel wird die Bewegung des drehbaren Teils 16, z.B. eine Drehung, erst dann gestartet, wenn der Abstand zwischen dem Segment 14 und dem drehbaren Teil 16 größer ist als eine Formteilhöhe 29. Die Formteilhöhe 29 entspricht der Abmessung, die das bevorzugt komplett entformte Formteil aus dem drehbaren Teil 16 herausragt. Ist beispielsweise bei zwei Segmenten 14 auf beiden Seiten die Formteilhöhe 29 als Abstand gegenüber dem drehbaren Teil 16 überschritten, wird die Bewegung des drehbaren Teils 16 eingeleitet. Das drehbare Teil 16 beginnt mit dem Drehen bei gleichzeitiger Bewegung des Tischs 30 und/oder der Segmente 14.

In einem weiteren bevorzugten Ausführungsbeispiel wird die Bewegung des wenigstens einen Segments 14, des Teils 16 und/oder des Tischs 30 positionsgeregelt. Beispielsweise kann die Positionsregelung mit einem servoelektrischen und/oder servohydraulischen Antrieb, z.B. ein Direktantrieb oder ein Kolbensystem, durchgeführt werden.

In der Regel besteht zwischen einem Antrieb, z.B. einem Motordrehwinkel und einer entsprechenden Bewegung des wenigstens einen Segments 14, des Teils 16 und/oder des Tischs 30 kein linearer Zusammenhang. In einem weiteren bevorzugten Ausführungsbeispiel werden für die Positionsregelung die Bewegungen des wenigstens einen Segments 14, des Teils 16 und/oder des Tischs 30 mit einer mathematischen Funktion verknüpft, um vorteilhaft eine möglichst effiziente und schnelle Werkzeugbewegung zu realisieren. In einem weiteren bevorzugten Ausführungsbeispiel berücksichtigt die mathematische Funktion die Kinematik des entsprechenden Antriebs. Beispielsweise stehen bei einem servoelektrischen Antrieb der Motordrehwinkel und die Linearbewegung der beweglichen Werkzeugplatte nicht in einem linearen Zusammenhang. Um vorteilhaft eine möglichst effiziente Bewegung zu realisieren, wird die gewünschte Bewegungsform mittels einer mathematischen Funktion mit der Kinematik des Antriebs verknüpft.

In einem weiteren bevorzugten Ausführungsbeispiel wird die Bewegung des Teils 16 in wenigstens einer Winkelposition um die Drehachse 18 entlang einer Drehkollisionskurve positionsgeregelt. Z.B. ist eine mathematische Funktion hinterlegt, welche die Diagonale des Würfelwerkzeugs entlang der Drehbewegung beschreibt.

In einem weiteren bevorzugten Ausführungsbeispiel ist die Drehkollisionskurve von wenigstens einem Parameter des Teils abhängig, z.B. der Kantenlänge 28 des drehbaren Teils 16 und/oder der Formteilhöhe 29.

Die Parameter Kantenlänge des drehbaren Teils und Formteilhöhe können in einem weiteren bevorzugten Ausführungsbeispiel in die Steuerung eingegeben und/oder geteacht werden. Durch das Teachen ergibt sich vorteilhaft eine erhöhte Sicherheit, da es somit zu keiner Kollision kommen kann.

Häufig weist die Maschine 10 noch weitere Peripheriesysteme, z.B. ein Robot System und/oder ein Greifer auf, mit welchen z.B. die Formteile entnommen werden. In einem weiteren bevorzugten Ausführungsbeispiel wird die Bewegung von wenigstens einem Peripheriesystem, z.B. einem Robot System, mit den Bewegungen des wenigstens einen Segments, des Tisches und/oder des Teils wenigstens teilweise miteinander gekoppelt. Dadurch werden Verzögerungen vermieden und die Zykluszeit weiter verkürzt. Beispielsweise können durch eine Steuerungsintegration eines Robot Systems die Bewegungsabläufe des Robot Systems ebenfalls mit den Bewegungen des Tischs 30 und/oder der Bewegung des drehbaren Teils 16 gekoppelt werden.

Eine Maschine 10 zur Verarbeitung von Kunststoffen und anderer plastifizierbarer Massen, insbesondere eine Spritzgießmaschine ist in einem weiteren Ausführungsbeispiel offenbart, welche eingerichtet, ausgeführt und/oder konstruiert ist, um wenigstens eines der vorher beschriebenen Verfahren unter Erreichung der genannten Vorteile auszuführen.

Ein weiteres Ausführungsbeispiel bildet ein Computerprogrammprodukt mit einem Programmcode, der auf einem Computer lesbaren Medium gespeichert ist, zur Durchführung wenigstens eines der zuvor beschriebenen Verfahren unter Erreichung der genannten Vorteile.

### Bezugszeichenliste

- 10: Maschine
- 12: Einspritzeinheit
- 14: Segment
- 16: drehbares Teil
- 18: Drehachse
- 20: Richtung
- 22: Richtung
- 24: Richtung
- 28: Kantenlänge
- 29: Formteilhöhe
- 30: bewegbarer Tisch
- 32: Richtung
- 34: Diagramm
- 36: Achse
- 38: Achse
- 42: Kurve
- 44: Kurve
- 46: Kurve
- 48: Kurve

## Patentansprüche

1. Verfahren zum Drehen eines drehbaren Teils (16) um wenigstens eine Drehachse (18) einer Maschine (10) zur Verarbeitung von Kunststoffen und anderer plastifizierbarer Massen, insbesondere einer Spritzgießmaschine, mit wenigstens einem bewegbaren Segment (14) für die Herstellung wenigstens eines Formteils, wobei die Bewegung des wenigstens einen Segments (14) mit der Bewegung des drehbaren Teils (16) wenigstens teilweise überlagert wird,
**dadurch gekennzeichnet, dass** die Bewegung des drehbaren Teils (16) dann gestartet wird, wenn der Abstand zwischen dem wenigstens einen Segment (14) und dem drehbaren Teil (16) größer ist als eine Formteilhöhe eines auf der Maschine (10) herzustellenden Formteils, und das drehbare Teil (16) an und/oder auf einem bewegbaren Tisch (30) angebracht ist und die Bewegung des Tisches (30) wenigstens teilweise mit der Bewegung des wenigstens einen Segments (14) und/oder der Bewegung des drehbaren Teils (16) überlagert wird und die Bewegungen des wenigstens einen Segments (14), des bewegbaren Tisches (30) und/oder des drehbaren Teils (16) wenigstens teilweise miteinander gekoppelt werden und dass die Bewegungen des Segments (14), des Tisches (30) und/oder des Teils (16) abhängig voneinander sind.

2. Verfahren nach Anspruch 1, **dadurch gekennzeichnet, dass** die Bewegung des bewegbaren Tisches (30) gegenüber der Bewegung des wenigstens einen Segments (14) mit einem Faktor kleiner oder gleich eins, vorzugsweise einem Faktor von 0,5 multipliziert wird.

3. Verfahren nach Anspruch 1 oder 2, **dadurch gekennzeichnet, dass** die Kopplung elektrisch und/oder mechanisch durchgeführt wird.

4. Verfahren nach einem der vorhergehenden Ansprüche, **dadurch gekennzeichnet, dass** die Bewegung des wenigstens einen Segments (14), des drehbaren Teils (16) und/oder des bewegbaren Tischs (30) positionsgeregelt wird.

5. Verfahren nach Anspruch 4, **dadurch gekennzeichnet, dass** für die Positionsregelung die Bewegung des wenigstens einen Segments (14), des drehbaren Teils (16) und/oder des bewegbaren Tischs (30) mit wenigstens einer mathematischen Funktion verknüpft wird.

6. Verfahren nach Anspruch 4 oder 5, **dadurch gekennzeichnet, dass** die Bewegung des drehbaren Teils (16) in wenigstens einer Winkelposition um die Drehachse (18) entlang einer Drehkollisionskurve positionsgeregelt wird.

7. Verfahren nach Anspruch 6, **dadurch gekennzeichnet, dass** die Drehkollisionskurve von wenigstens einem Parameter des drehbaren Teils (16) abhängig ist.

8. Verfahren nach Anspruch 7, **dadurch gekennzeichnet, dass** der wenigstens eine Parameter des drehbaren Teils (16) geteacht wird.

9. Verfahren nach einem der vorhergehenden Ansprüche, **dadurch gekennzeichnet, dass** die Bewegung von wenigstens einem Peripheriesystem mit den Bewegungen des wenigstens einen Segments (14), des bewegbaren Tisches (30) und/oder des drehbaren Teils (16) wenigstens teilweise miteinander gekoppelt wird.

10. Maschine (10) zur Verarbeitung von Kunststoffen und anderer plastifizierbarer Massen, insbesondere eine Spritzgießmaschine, **dadurch gekennzeichnet, dass** die Maschine (10) eingerichtet, ausgeführt und/oder konstruiert ist, um das Verfahren nach einem der Ansprüche 1 bis 9 auszuführen.

11. Computerprogrammprodukt mit einem Programmcode, der auf einem Computer lesbaren Medium gespeichert ist, zur Durchführung des Verfahrens nach einem der Ansprüche 1 bis 9 mit einer Maschine (10) zur Verarbeitung von Kunststoffen und anderer plastifizierbarer Massen, insbesondere einer Spritzgießmaschine.

## Claims

1. A method for rotating a rotatable part (16) about at least one axis of rotation (18) of a machine (10) for processing plastics and other plasticizable materials, in particular an injection molding machine, having at least one movable segment (14) for the manufacture of at least one molded part, wherein movement of the at least one segment (14) is at least partly overlapped by movement of the rotatable part (16),
**characterized in that** the movement of the rotatable part (16) is started when the spacing between the at least one segment (14) and the rotatable part (16) is greater than a molded part height of a molded part that is to be manufactured on the machine (10), and the rotatable part (16) is mounted on and/or on top of a movable table (30), and movement of the table (30) is at least partly overlapped by the movement of the at least one segment (14) and/or the movement of the rotatable part (16) and the movements of the at least one segment (14), the movable table (30) and/or the rotatable part (16) are at least partly coupled to one another and that the movements of the segment (14), the movable table (30) and/or the rotatable part are dependent on each other.

2. The method as claimed in claim1, **characterized in that** movement of the movable table (30) in relation to movement of the at least one segment (14) is multiplied by a factor of less than or equal to one, preferably a factor of 0.5.

3. The method as claimed in claim 1 or 2, **characterized in that** the coupling is carried out electrically and/or mechanically.

4. The method as claimed in one of the preceding claims, **characterized in that** movement of the at least one segment (14), the rotatable part (16) and/or the movable table (30) is position-controlled.

5. The method as claimed in claim 4, **characterized in that** for position control the movement of the at least one segment (14), the rotatable part (16) and/or the movable table (30) is linked by at least one mathematical function.

6. The method as claimed in claim 4 or 5, **characterized in that** the movement of the rotatable part (16) in at least one angular position about the axis of rotation (18) is position-controlled along a rotational collision curve.

7. The method as claimed in claim 6, **characterized in that** the rotational collision curve is dependent on at least one parameter of the rotatable part (16).

8. The method as claimed in claim 7, **characterized in that** the at least one parameter of the rotatable part (16) is taught.

9. The method as claimed in one of the preceding claims, **characterized in that** the movement of at least one peripheral system is at least partly coupled to the movements of the at least one segment (14), the movable table (30) and/or the rotatable part (16).

10. A machine (10) for processing plastics and other plasticizable materials, in particular an injection molding machine, **characterized in that** the machine (10) takes a form, is configured and/or is set up to carry out the method as claimed in one of claims 1 to 9.

11. A computer program product with a program code that is stored on a computer-readable medium, for the purpose of carrying out the method as claimed in one of claims 1 to 9 with a machine (10) for processing plastics and other plasticisable materials, in particular an injection moulding machine.

## Revendications

1. Procédé pour faire tourner une pièce tournante (16) autour d'au moins un axe de rotation (18) d'une machine (10) pour la transformation de matières plastique et d'autres masses plastifiables, en particulier d'une machine de moulage par injection, comportant au moins un segment (14) mobile pour la fabrication d'au moins une pièce moulée, le mouvement du ou des segment(s) (14) étant au moins partiellement superposé au mouvement de la pièce tournante (16), **caractérisé en ce que** le mouvement de la pièce tournante (16) n'est démarré que lorsque la distance entre le ou les segment(s) (14) et la pièce tournante (16) est supérieure à la hauteur d'une pièce moulée à fabriquer sur la machine (10) et la pièce tournante (16) est appliquée au niveau de et/ou sur une table déplaçable (30) et le mouvement de la table (30) est superposé au moins partiellement au mouvement du ou des segment(s) (14) et/ou au mouvement de la pièce tournante (16) et les mouvements du ou des segment(s) (14), de la table déplaçable (30) et/ou de la pièce tournante (16) sont au moins partiellement couplés les uns aux autre et les mouvement du segment (14), de la table (30) et/ou de la pièce (16) sont dépendants les uns des autres.

2. Procédé selon la revendication 1, **caractérisé en ce que** le mouvement de la table déplaçable (30) est multiplié par un facteur inférieur ou égal à un, de préférence par un facteur de 0,5, par rapport au mouvement du ou des segment(s) (14).

3. Procédé selon la revendication 1 ou 2, **caractérisé en ce que** le couplage est effectué de manière électrique et/ou mécanique.

4. Procédé selon l'une des revendications précédentes, **caractérisé en ce que** le mouvement du ou des segments (14), de la pièce tournante (16) et/ou de la table tournante (30) est réglé en position.

5. Procédé selon la revendication 4, caractérisé en que le réglage de la position du mouvement du ou des segments (14), de la pièce tournante (16) et/ou de la table déplaçable (30) et lié à au moins une fonction mathématique.

6. Procédé selon la revendication 4 ou 5, **caractérisé en ce que** le mouvement de la pièce tournante (16) est réglé en position dans au moins une position angulaire autour de l'axe de rotation (18) le long d'une courbe de collision de rotation.

7. Procédé selon la revendication 6, **caractérisé en ce que** la courbe de collision de rotation est dépendante d'au moins un paramètre de la pièce tournante (16).

8. Procédé selon la revendication 7, **caractérisé en ce que** le ou les paramètre(s) de la pièce tournante (16) est pris en compte.

9. Procédé selon l'une des revendications précédentes, **caractérisé en ce que** le mouvement d'au moins un système périphérique avec les mouvements du ou des segment(s) (14), de la table déplaçable (30) et/ou de la partie tournante (16) sont couplés les uns aux autres au moins partiellement.

10. Machine (10) pour la transformation de matières plastiques et d'autres masses plastifiables, en particulier, machine de moulage par injection, **caractérisée en ce que** la machine (10) est configurée, réalisée et/ou construite pour la mise en oeuvre du procédé selon l'une des revendications 1 à 9.

11. Produit à programme d'ordinateur avec un code programme, qui est stocké sur un support lisible par un ordinateur, pour la mise en oeuvre du procédé selon l'une des revendications 1 à 9 avec une machine (10) pour la transformation de matières plastiques et d'autres masses plastifiables, en particulier une machine de moulage par injection.
